# EUROPEAN PATENT SPECIFICATION

(11) **EP 0 861 022 B1**
(45) Date of publication and mention of the grant of the patent: **04.07.2001**
(21) Application number: 96934216.1
(22) Date of filing: 04.11.1996
(51) Int. Cl.: A01K 11/00, H04B 1/59

(54) **ATTACHABLE TRANSPONDER HOUSING**
BEFESTIGBARES TRANSPONDER-AUFNAHMEGEHÄUSE
BOITIER DE TRANSPONDEUR POUVANT ETRE FIXE

(30) Priority: 03.11.1995 WO PCT/AU96/00693
(43) Date of publication of application: 02.09.1998
(60) Divisional application: 00127496.8
(73) Proprietor: ALFA LAVAL AGRI AB, 147 21 Tumba (SE)
(72) Inventor: Finlayson, John, Douglas, Frank, Alderley, QLD 4051 (AU); Finlayson, Dorothy, Elizabeth, Alderley, QLD 4051 (AU)
(74) Representative: Berglund, Stefan
(86) International application number: AU9600693
(87) International publication number: WO9716963

(56) References cited:
- WO-A-84/01688
- WO-A-92/02127
- WO-A-92/20221
- DE-A- 4 315 366
- GB-A- 1 168 509
- GB-A- 2 181 919
- GB-A- 2 259 631
- US-A- 4 129 855
- US-A- 5 307 759
- US-A- 5 461 807
- PATENT ABSTRACTS OF JAPAN vol. 95, no. 5, 30 June 1995 & JP 07 031318 A (KUBOTA CORP.), 3 February 1995
- PATENT ABSTRACTS OF JAPAN, Vol. 95, No. 5; & JP,A,07 031 318 (KUBOTA CORP.), 3 February 1995.

## Description

### FIELD OF THE INVENTION

This invention relates to an attachable transponder housing for attachment to a tag assembly which is attachable to animals, and in particular but not necessarily limited to animals such as ruminants inclusive of cattle, sheep, goats, deer or camels.

### BACKGROUND OF THE INVENTION

Identification of ruminants or other animals usually involves physical identification of distinguishing marks such as hard branding, ear tagging, ankle tagging and implantable transponders inserted under the skin.

Branding may distress the ruminant and may cause hide damage resulting in a loss of profit. Further, branding does not identify individual animals and only identifies the owner of the animal.

Ear tagging techniques generally only provide a visual representation on the ear tag and is not suitable for automatic identification of individual ruminants.

A problem with implantable transponders is that there is a possibility that such transponders may migrate in the ruminants either as a whole or in fragments. Accordingly, due to the rapid production line in slaughter houses the transponder or parts thereof may be undetected resulting in the possibility of the transponder or parts entering the human food chain. This is highly undesirable and has been deemed unacceptable by the Australian Meat and Livestock Corporation.

Another form of identification is that of administering a transponder enclosed in an ingestible capsule into the digestive system of the ruminant. The ingestible capsule has a specific gravity so that it may permanently reside for example in the reticulum or rumen. Such capsules are disclosed in Patent specifications GB2165723, ZA8303599, US4262632, WO93/05648 and AU63038/94.

Although ingestible capsules provide security they have not been readily acceptable by, for example, the cattle industry as the capsules are not recoverable until slaughter and cannot be administered to cattle aged three months and under.

Document JP-A-7 031 318 discloses an attachable transponder housing. The attachable transponder housing includes a hole into which a belt may be inserted. The belt is supposed to be attached to an animal. The attachable transponder housing also comprises a space into which an electronic part may be inserted.

DE-A-4 315 366 discloses a system for the identification of animals and objects. The system comprises an identification element which is formed with a shaft. The identification element may be attached to an animal or to an object such that the shaft penetrates a portion of the animal or the object. When the shaft has penetrated the portion in question, a securing element may be attached to the end of the shaft.

A wide variety of forms of tag assemblies are known. Generally, these include a button that engages a boss formed in a planar portion of the tag. Visual identification is provided on the planar section by colour coding or numbering. Some of the prior art tag assemblies include a housing or chamber in which a transponder may be located. Reference is made to Alfa-Laval Agriculture International AB application number WO 92/02127 and United States patent number 4694781 in the name of Howe et al. Neither of these documents describe an attachable transponder housing that is able to be attached to a wide variety of the known animal identification tags to convert them from visual only to visual and electronic identification.

It is an aim of this invention to provide an attachable transponder housing for attachment to a tag assembly which is attachable to an animal.

It is a further aim of the invention to provide an attachable transponder housing that converts an existing tag assembly employing visual identification to also employ electronic identification.

### SUMMARY OF THE INVENTION

The aims of the invention is achieved by an attachable transponder housing according to claim 1 and by the combination of an ear tag assembly and an attachable transponder housing in accordance with claim 10. Further advantageous embodiments of the invention are defined in the dependent claims.

Preferably, said attachment means is integral with said body.

Suitably, on outer surface area of said body is planar, said surface area extending along a length of said body.

In preference, the body is formed form a hard plastics material such as nylon. The hard plastics material is most suitably an ultraviolet resistant material for prolonged life.

Suitably, the attachment means is flexible or alternatively rigid.

Preferably, the chamber is of a constant cross sectional area.

Suitably, the chamber has a plug inserted in an open end thereof thereby holding said transponder captive therein. The plug preferably includes a pressure equalising passage formed therein. Alternatively, a pressure equalising passage may be formed in the body. The pressure equalising passage provides communication between the chamber and the outside of the body.

The tag assembly is preferably an ear tag assembly and the attachable transponder housing preferably attaches to the ear tag assembly so as to be located between the ear tag assembly and the animal.

The body of the attachable transponder housing may suitably be of generally cylindrical shape having a ridge projecting therefrom.

The attachable transponder housing may further comprise cushioning means for surrounding the transponder in the chamber.

### BRIEF DESCRIPTION OF THE DRAWINGS

In order that this invention may be readily understood and put into practical effect reference will now be made to a preferred embodiment illustrated in the accompanying drawings in which:
FIG 1 is a perspective view of an attachable transponder housing;
FIG 2 is a perspective view of the housing of FIG 1 when attached to one type of ear tag assembly;
FIG 3 is a perspective view of the housing of FIG 1 when attached to another type of ear tag assembly;
FIG 4 is a perspective view of a second embodiment of an attachable transponder housing;
FIG 5 is a perspective view of the housing of FIG 4 when attached to the type of ear tag assembly of FIG 3; and
FIG 6 is a perspective view of a transponder and cushioning sheath.

### DETAILED DESCRIPTION

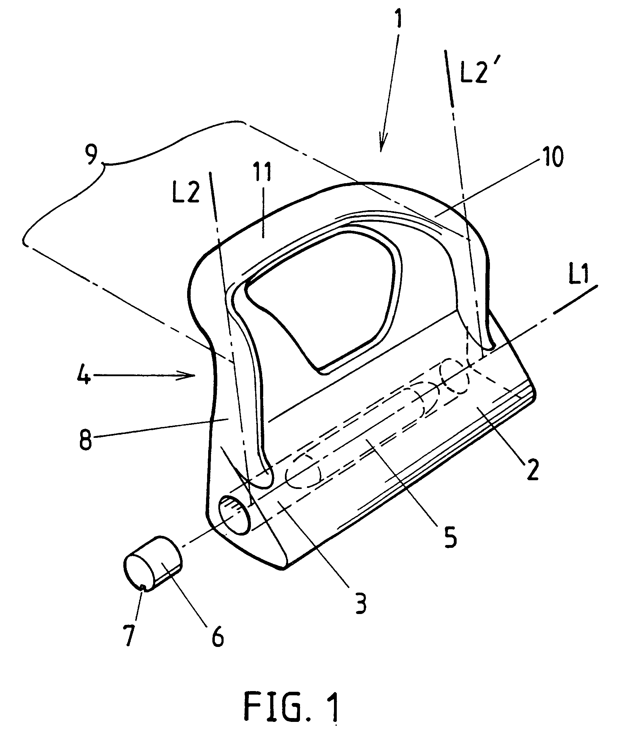

Referring to FIG 1 there is illustrated an attachable transponder housing 1 comprising a body 2 with a chamber 3 of constant cross-sectional area and extending from body 2 is an integrally formed attachment means 4.

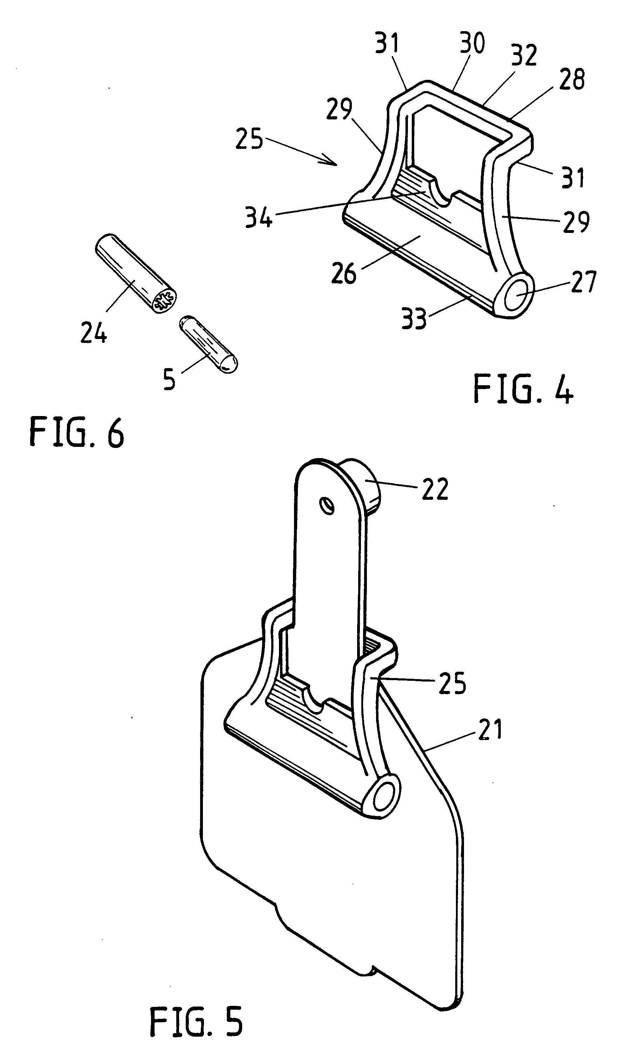

Contained inside chamber 3 is an electronic identification transponder 5 which is surrounded by a cushioning means (such as shown in FIG 6 and described later) which may be a resilient sheath or viscous substance. Transponder 5 is held captive in chamber 3 by an insertable plug 6 having a pressure equalizing slot 7 extending along the length of plug 6.

Plug 6 may also include a circumferential ridge (not shown) to assist with retaining the plug 6 in the chamber 3. A corresponding trough may also be formed on the inside surface of chamber 3.

Attachment means 4 comprises two spaced portions 8 spaced along a longitudinal axis L1 of body 2. Strap 4 also comprises a medial portion 9 between spaced portions 8. Medial portion 9 is configured such that it has a shape comprising two laterally extending portions 10 adjacent a respective one of space portions 8 and an intermediate portion 11 between portions 10. Further intermediate portion 11 has a circular cross section and spaced portions 8 have longitudinal axes L2 and L2' which are lateral to longitudinal axis L1 and laterally extending portions 10 are lateral to both axis L1 and L2, L2'.

Body 2 has an outer surface which has three substantially flat surface areas extending along the length of body 2 thereby providing a substantially triangular appearance. The triangular shape provides strength and resists damage to the body that can occur in normal usage. Failure of prior art transponder housings due to harsh conditions associated with livestock has been known and the inventors have found that strengthening of the body by appropriate shaping can minimise this problem.

Attachable transponder housing 1 may be formed from any suitable material, however, the embodiment as illustrated is suitably formed from injection moulded ultra-violet resistant nylon or plastics material. After injection moulding attachable transponder housing 1, transponder 5 is inserted in chamber 3 and transponder 5 is padded from shocks by a plastic sheath 24 or a viscous substance. Plug 6 is then inserted into the open end of chamber 3 in which slot 7 allows for pressure equalization and therefore ease of insertion. Although the pressure equalising passage is shown in the plug in the preferred embodiment, it will be appreciated that a pressure equalising passage could be formed in the body to achieve the same ease of insertion of the plug.

Because the transponder 5 can be inserted in the chamber 3 after manufacture the costs associated with failure of the transponder during the manufacturing process are eliminated. Furthermore, the transponder can placed in the chamber after the attachable transponder housing and tag assembly have been attached to the animal.

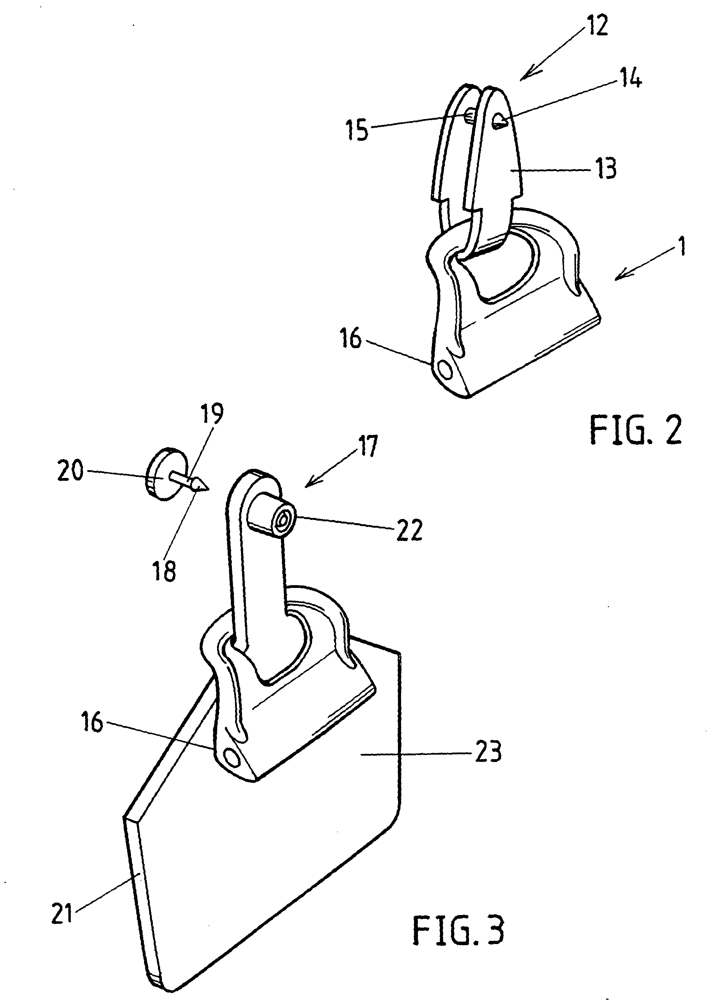

With reference to FIG 2 there is illustrated attachable transponder housing 1 attached to an ear tag assembly 12 which comprises an integral sandwiching member 13 and a male snap fitment 14 at a free end of a shank 15. Ear tag assembly 12 is well-known to persons skilled in the art and carries visual identification information in the form of colour coding or alphanumeric coding. The form of ear tag shown in FIG 2 cannot carry any form of electronic identification.

In use, attachable transponder housing 1 is positioned as illustrated before shank 15 pierces through the ear of the animal to be tagged wherein a planar area 16 of the outer surface of housing 1 faces the cheek or ear of the animal. Once tagged, housing 1 remains attached to ear tag assembly 12 by attachment means 4 enclosing a portion of assembly 12.

If required ear tag assembly 12 may be removed from the tagged animal and therefore housing 1 may be re-used on another animal (i.e. if the tagged animal is sold to another person).

A similar arrangement to that shown in FIG 2 can be used for ankle tagging of animals. The ankle tag is looped through the attachment means of the attachable transponder housing and then secured to the animal in the normal way.

Referring to FIG 3 there is illustrated housing 1 attached to another form of ear tag assembly 17 which is commonly known to a skilled addressee. Ear tag assembly 17 comprises a button 20 having a male snap fitment 18 at one end of shank 19 and an ear tag 21 with a female member 22 for complimentary snap fitment engagement with male snap fitment 18. In use, housing 1 is positioned as illustrated before shank 19 pierces through the ear of the animal to be tagged wherein planar area 16 abuts a non-sandwiching surface 23 of ear tag 21.

Once tagged, housing 1 remains attached to ear tag assembly 17 by attachment means 4 enclosing a portion of assembly 17. Further, because of the shape of attachment means 4, surface 16 lies flat against surface 23 which therefore has aesthetic appeal and reduces movement of housing 1.

A second embodiment of an attachable transponder housing 25 is shown in FIG 4. The attachable transponder housing 25 comprises a body 26 with a chamber 27 formed therein. As with the previous embodiment, the chamber 27 houses a transponder 5 in a sheath 24. The chamber 27 is close by a plug as previously described but not specifically shown in FIG 4. Extending from body 26 is integrally formed attachment means 28.

Attachment means 28 comprises two spaced portions 29 spaced along a longitudinal axis of the body 26. The spaced portions 29 are joined by a medial portion 30 to form a loop. The medial portion 30 comprises two laterally extending portions 31 extending from the spaced portions 29 and an intermediate portion 32. Intermediate portion 32 and laterally extending portions 31 have a substantially square cross-section. Laterally extending portions 31 make approximately a ninety degree angle with spaced portions 29. This allows the attachable transponder housing 25 to sit flat against the ear tag assembly 17 as shown in FIG 5.

The body 26 of attachable transponder housing 25 is generally cylindrical in shape with a projecting ridge 33 formed along one side. The inventors have found that the projecting ridge 33 provides additional strength to the housing which is necessary for the purposes described earlier. The ridge 33 is formed in a side of the body 26 opposite to the direction of projection of laterally extending portions 31. This allows the attachable transponder housing 25 to sit closely and securely against ear tag 21.

The inventors have found that it is preferable to hang the attachable transponder housing 25 on the rear of the ear tag 21 so that visual identification on the front of ear tag 21 is not obscured.

To provide additional strength to the attachable transponder housing a web 34 is formed between the spaced portions 29. The web 34 also attaches to the body 26. The web 34 provides strength to the attachment means 28 and minimises the likelihood of failure due to twisting or stretching.

## Claims

1. An attachable transponder housing (1) for attachment to a tag assembly (12, 17), said attachable transponder housing (1) including:
a body (2, 26) having a chamber (3, 27) containing a transponder (5) therein;
and
attachment means (4, 28) associated with the body (2, 26) for pendant attachment of the attachable transponder housing (1) to the tag assembly (12, 17);
wherein said attachment means (4, 28) comprises two spaced portions (8, 29) extending from the body (2, 26) and a medial portion (9, 30) joining the spaced portions (8, 29) such that the spaced portions (8, 29), medial portion (9, 30) and body (2, 26) form a loop capturing a portion of the tag assembly, characterised in that the medial portion (9, 30) is of a shape comprising two laterally extending portions (10, 31) adjacent a respective one of said spaced portions (8, 29) and an intermediate portion (11, 32) therebetween, said laterally extending portions (10, 31) being lateral relative to both the longitudinal axis (L1) of said body (2, 26) and the longitudinal axes (L2, L2') of said spaced portions (8, 29).

2. The attachable transponder housing (1) of claim 1 wherein said attachment means (4, 28) is formed integral with the body (2, 26).

3. The attachable transponder housing (1) of claim 1 wherein the spaced portions (8, 29) are spaced along a longitudinal axis (L1) of the body (2, 26).

4. The attachable transponder housing (1) of claim 1 wherein the body (2, 26) is formed of hard plastics material.

5. The attachable transponder housing (1) of claim 1 wherein the body (2, 26) is formed of ultraviolet resistant material.

6. The attachable transponder housing (1) of claim 1 further comprising a removable plug (6) for closing the chamber (3, 27), said plug (6) including a pressure equalizing passage (7).

7. The attachable transponder housing (1) of claim 6 further comprising a circumferential ridge on the plug (6) for engaging a corresponding circumferential trough in the chamber (3, 27).

8. The attachable transponder housing (1) of claim 1 wherein the body (2, 26) is of a generally cylindrical shape having a ridge (33) projecting therefrom.

9. The attachable transponder housing (1) of claim 1 further comprising cushioning means (24) surrounding the transponder (5) in the chamber (3, 27).

10. In combination, an ear tag assembly (12, 17) and an attachable transponder housing (1) according to any one of the preceding claims 1 - 9 for attachment to the ear tag assembly (12, 17).

## Patentansprüche

1. Ansetzbares Transpondergehäuse (1) zum Ansetzen an eine Anhängeranordnung (12, 17) mit
einem Körper (2, 26) mit einer Kammer (3, 27), die einen Transponder (5) enthält, und
einer Ansetzeinrichtung (4, 28), die dem Körper (2, 28) zum Anhängen des Ansetz-Transpondergehäuses (1) an die Anhängeranordnung (12,17) zugeordnet ist,
wobei die Ansetzeinrichtung (4, 28) zwei beabstandete Teile (8, 29), die vom Körper (2, 26) abstehen, sowie einen Mittelteil (9, 30) aufweist, der die beabstandeten Teile (8, 29) miteinander verbindet, so dass die beabstandeten Teile (8, 29), der Mittelteil (9, 30) und der Körper (2, 26) eine Schleife bilden, die einen Teil der Anhängeranordnung festhält,
dadurch gekennzeichnet, dass der Mittelteil (9, 30) eine Gestalthat, die jeweils angrenzend an einen zugehörigen der beabstandeten Teile (8, 29) zwei seitlich abstehende Teile (10, 31) sowie zwischen diesen einen Zwischenteil (11, 32) aufweist, wobei diese seitlich verlaufenden Teile (10, 31) seitlich relativ zu sowohl der Längsachse (L1) des Körpers (2, 26) als auch zu den Längsachsen (L2, L2') der beabstandeten Teile (8, 29) verlaufen.

2. Ansetzbares Transpondergehäuse (1) nach Anspruch 1, bei dem die Ansetzeinrichtung (4, 28) einteilig mit dem Körper (2, 26) ausgebildet ist.

3. Ansetzbares Transpondergehäuse (1) nach Anspruch 1, bei dem die beabstandeten Teile (8, 29) entlang einer Längsachse (L1) des Körper (2, 26) beabstandet sind.

4. Ansetzbares Transpondergehäuse (1) nach Anspruch 1 bei dem der Körper (2, 26) aus Hartkunststoff ausgebildet ist.

5. Ansetzbares Transpondergehäuse (1) nach Anspruch 1, bei dem der Körper (2, 26) aus einem gegen ultraviolettes Licht widerstandsfähigen Werkstoff ausgebildet ist.

6. Ansetzbares Transpondergehäuse (1) nach Anspruch 1 weiterhin mit einem herausnehmbaren Stopfen (6) zum Verschließen der Kammer (3, 27), wobei der Stopfen (6) einen Druckausgleichskanal (7) enthält.

7. Ansetzbares Transpondergehäuse (1) nach Anspruch 5 weiterhin mit einer Umfangsleiste auf dem Stopfen (6), der in eine entsprechende Umfangsnut in der Kammer (3, 27) einrastbar ist.

8. Ansetzbares Transpondergehäuse (1) nach Anspruch 1, bei dem der Körper (2, 26) eine allgemein zylindrische Gestalt aufweist, von der eine Leiste (33) absteht.

9. Ansetzbares Transpondergehäuse (1) nach Anspruch 1 weiterhin mit einer Polsterung (24), die den Transponder (5) in der Kammer (3, 27) umgibt.

10. Kombination einer Ohr-Anhängeranordnung (12,17) und eines ansetzbaren Transpondergehäuses (1) nach einem der voranstehenden Ansprüche 1 bis 9 zum Ansetzen an einer Ohr-Anhängeranordnung (12, 17).

## Revendications

1. Boîtier de transpondeur (1) pouvant être fixé, pour la fixation à un élément d'étiquette (12, 17), ledit boîtier de transpondeur pouvant être fixé (1) incluant :
un corps (2, 26) ayant une chambre (3, 27) contenant un transpondeur (5) dans celle-ci ; et
des moyens de fixation (4, 28) associés au corps (2, 26) pour la fixation pendante du boîtier de transpondeur pouvant être fixé (1), à l'élément d'étiquette (12, 17) ;
dans lequel lesdits moyens de fixation (4, 28) comprennent deux portions espacées (8, 29) s'étendant du corps (2, 26) et une portion médiane (9, 30) joignant les portions espacées (8, 29), de telle sorte que les portions espacées (8, 29), la portion médiane (9, 30) et le corps (2, 26) forment une boucle entourant une portion de l'élément d'étiquette,
caractérisé en ce que la portion médiane (9, 30) a une forme comprenant deux portions s'étendant latéralement (10, 31) adjacentes à une respective desdites portions espacées (8, 29) et une portion intermédiaire (11, 32) entre elles, lesdites portions s'étendant latéralement (10, 31) étant latérales par rapport, à la fois, à l'axe longitudinal (L1) dudit corps (2, 26) et aux axes longitudinaux (L2, L2') desdites portions espacées (8, 29).

2. Boîtier de transpondeur pouvant être fixé (1) selon la revendication 1, dans lequel lesdits moyens de fixation (4, 28) font partie intégrante du corps (2, 26).

3. Boîtier de transpondeur pouvant être fixé (1) selon la revendication 1, dans lequel les portions espacées (8, 29) sont espacées le long d'un axe longitudinal (L1) du corps (2, 26).

4. Boîtier de transpondeur pouvant être fixé (1) selon la revendication 1, dans lequel le corps (2, 26) est réalisé en une matière plastique dure.

5. Boîtier de transpondeur pouvant être fixé (1) selon la revendication 1, dans lequel le corps (2, 26) est réalisé en une matière résistant aux ultraviolets.

6. Boîtier de transpondeur pouvant être fixé (1) selon la revendication 1, comprenant de plus un bouchon amovible (6) pour fermer la chambre (3, 27), ledit bouchon (6) incluant un passage d'équilibrage de pression (7).

7. Boîtier de transpondeur pouvant être fixé (1) selon la revendication 6, comprenant de plus une saillie périphérique sur le bouchon (6) pour engager un creux périphérique correspondant dans la chambre (3, 27).

8. Boîtier de transpondeur pouvant être fixé (1) selon la revendication 1, dans lequel le corps (2, 26) a une forme généralement cylindrique ayant un rebord (33) faisant saillie de celui-ci.

9. Boîtier de transpondeur pouvant être fixé (1) selon la revendication 1, comprenant de plus des moyens d'amortissement (24) entourant le transpondeur (5) dans la chambre (3, 27).

10. En combinaison, un élément d'étiquette pour oreille (12, 17) et un boîtier de transpondeur pouvant être fixé (1) selon l'une quelconque des revendications précédentes 1 - 9 pour la fixation à l'élément d'étiquette pour oreille (12, 17).
